# EUROPÄISCHE PATENTSCHRIFT

(11) **EP 2 524 899 B1**
(45) Veröffentlichungstag und Bekanntmachung des Hinweises auf die Patenterteilung: **29.08.2018**
(21) Anmeldenummer: 12002893.1
(22) Anmeldetag: 25.04.2012
(51) Int. Cl.: C02F 1/50, C02F 1/76, C02F 103/28

(54) **VERFAHREN ZUR BIOZIDEN BEHANDLUNG VON INDUSTRIELLEN WASSERSYSTEMEN**
METHOD FOR BIOCIDAL TREATMENT OF INDUSTRIAL WATER SYSTEMS
PROCÉDÉ DE TRAITEMENT BIOCIDE DE SYSTÈMES D'EAU INDUSTRIELS

(30) Priorität: 16.05.2011 DE 102011101719
(43) Veröffentlichungstag der Anmeldung: 21.11.2012
(73) Patentinhaber: Kurita Water Industries Ltd., Nakano-ku, Tokyo 164-0001 (JP)
(72) Erfinder: Imhof, Joachim, 67065 Ludwigshafen /Rhein (DE); Höötmann, Ute, 68526 Ladenburg (DE)
(74) Vertreter: Zellentin & Partner mbB Patentanwälte

(56) Entgegenhaltungen:
- EP-A1- 1 391 430
- WO-A2-2007/096885

## Beschreibung

Die Erfindung betrifft ein Verfahren zur bioziden Behandlung von industriellen Wassersystemen.

Das Wachstum von Mikroorganismen im wässrigen Milieu ist ein natürlicher Vorgang, dies führt zum sogenannten "Biofouling", welches in industriellen wasserführenden Systemen weitreichende Folgen haben kann. Verschiedenste Faktoren begünstigen dies, wie z.B. Wassertemperatur, pH Wert und organische und anorganische Verunreinigungen. So gehören die Behinderung des Wärmeübergangs bei Wärmetauschern, die Verminderung der Kühlleistung in Kühltürmen, das Verstopfen von Filtern, Produktionsstörungen in der Papierproduktion u.v.a.m. zu den Folgen unerwünschten biologischen Wachstums.

Zahlreiche Vorschläge zur Lösung dieser Probleme wurden gemacht. Stand der Technik z.B. in der Papierproduktion ist der Einsatz von Bioziden, z.B. Bromverbindungen, Isothiazolonen, Dithiocarbamaten, Thiocyanaten, quaternären Ammoniumverbindungen u.a. (Weigl J, Grenz R, Baumgarten HL, "Grundlagen der Chemie für Papieringenieure" PTS Verlag München 1992 5.2-5.45).

Aus der US 5112871 ist eine Verbindungsklasse basierend auf Bromnitroalkanolen bekannt, die eine gute antimikrobielle Aktivität und Stabilität in wässrigen Systemen aufweisen und daher als Antifoulingmittel in industriellen Wasserkreisläufen verwendet werden. Durch Kombination mit weiteren organischen antimikrobiellen Mitteln kann das Wirkungsspektrum verbessert werden. Diese Verbindungen können zusammen mit einem Trägermaterial, wie Silica, Aluminiumoxid oder Talkum in Form einer Emulsion oder Suspension dem zu behandelnden Wasser zugegeben werden. Die hier vorgesehenen Zugabemengen an Biozid können von 0,001 bis 30 Gew.-% schwanken, bevorzugt zwischen 0,1 bis 10 %. Nachteilig bei der Verwendung dieser Verbindungen ist, dass um eine weitgehende Abtötung aller Mikroorganismen zu erreichen, hohe Einsatzmengen erforderlich sind, was die Verwendung unökonomisch macht. Weiterhin ist eine Formulierung einiger dieser Mikrobiozide wegen der geringen Löslichkeit in Wasser nur unter Verwendung von organischen Lösungsvermittlern möglich, was zur Erhöhung des CSB Wertes beiträgt. Zudem sind diese Substanzen in der Regel mit einem relativ hohen Gefahrenpotential behaftet, so dass auch aus diesem Grunde ihr Einsatz beschränkt ist.

Ein weiterer Weg zur antimikrobiellen Behandlung von industriellen Wassersystemen ist der Einsatz von Oxidationsmitteln, vorzugsweise von Halogenen oder Halogenoxiden, die aus den Halogeniden und Oxyhalogensäuren durch Disproportionierung in situ hergestellt werden. Besonders bevorzugt ist Chlorbleichlauge, NaOCl, deren Anwendung sehr verbreitet ist. In Wassersystemen mit einer hohen organischen Verunreinigung und Schmutzfracht kann jedoch die Dosierung oxidierender Biozide durch die "Chlorzehrung" ineffektiv werden (Standard methods for the examination of water and waste water, 16th Edition, methods § 409, p 316-319). Durch Zusatz von Ammonium oder Aminoderivaten zu solchen belasteten Wässern wird die Bildung von Chloraminen erreicht, die keiner so starken "Chlorzehrung" unterworfen sind (Atasi Khalil z. et al., Proc. Ann. Conf. Am. Water Works Assoc., 1988 (Pt 2), pp 1763-1770).

In mit organischen Verbindungen stark belasteten Wassersystemen können relativ stabile und längere Zeit wirksame oxidierende Biozide, wie Halogenamide, aus Ammoniumsalzen und Halogen freisetzenden Oxidationsmitteln in situ hergestellt werden, so beschrieben in EP 517 102 B1, EP 1 293 482 B1 und EP 1 734 008 A2. Bevorzugt ist dabei ein Gemisch aus Ammoniumbromid und Natriumhypochlorit in Wasser.

Ein großer Nachteil in mit organischen und anorganischen Verbindungen stark belasteten Wassersystemen besteht darin, dass sich die oxidativ wirkenden bioziden Komponenten, auch in der oben beschriebenen stabilisierten Form, durch Chlorzehrung schnell verbrauchen, und somit die biozide Wirkung und Effektivität sehr schnell abnehmen.

Weiterhin ist die Behandlung eines wasserführenden Systems mit Kombinationsprodukten möglich.

In der WO2007/096885 wird eine biozide Formulierung beschrieben, die als Komponente mindestens ein nicht-oxidierendes Biozid, eine konzentrierte Lösung eines anorganischen Halogensalzes enthält, wobei die Formulierung in Form einer Suspension bzw. Emulsion bereitgestellt wird, die auch rheologische Hilfsmittel zur Verdickung enthält.

Unter nicht-oxidierenden Bioziden versteht man hier alle bekannten Typen, wie auf Aldehyd basierende Verbindungen, Amine, Amide, Imide, Bromide, halogenierte, Schwefel enthaltende Biozide, quarternäre Phosphonium enthaltende Verbindungen. Besonders bekannt und häufig verwendet ist die Verbindung DBNPA oder 2,2-Dibromo-3-nitrilopropionamid.

Unter anorganischen Halogenidsalzen wird eine in situ hergestellte Verbindung verstanden, z.B. aus Cl₂, Br₂, Hypohalogeniden bzw. deren Säuren, und/oder Chlorid, Bromidsalze, z.B. NaBr, MgBr₂, CaBr₂, LiBr, NH₄Br, KBr.

Die biozide Formulierung stellt eine Emulsion dar. Emulsionen oder Suspensionen als Darreichungsform sind jedoch nicht in Wassersystemen vorteilhaft wegen den dort häufig stattfindenden Pump- und Dosiervorgängen, vielfach werden deshalb wässrige Lösungen gewünscht, ohne sog. Träger- oder Carriersysteme, damit man die bereits vorhanden organische Schmutzfracht der zu behandelnden Wassersysteme nicht durch zusätzlichen Eintrag von organischen rheologischen Hilfsmitteln, z.B. Polyethylenglykole, Xanthangummi, etc. noch steigert. Bei Einsatz dieser rheologischen Hilfsmittel werden die bioziden Emulsionen oft nur schwer pumpbar, verstopfen die Leitungen und sind außerdem in der bioziden Wirkung durch Adsorptionsvorgänge vermindert.

In der EP 1 391 430 wird eine Methode unter Verwendung einer synergistisch wirkenden Biozidmischung zur Wasserreinigung beschrieben. Das System besteht aus einer Stickstoff enthaltenden Komponente, die durch ein Oxydationsmittel aktiviert wird und einem nicht-oxidierenden Biozid. Die Mischung ist eine wässrige Lösung. Als Stickstoff enthaltende Verbindung kann unter anderem Ammoniumbromid, als Oxydationsmittel Natriumhypochlorit und als nicht-oxidierendes Biozid 2-Brom-2-nitropropan-1,3-diol verwendet werden. Diese Mischung kann dem zu behandelnden Wasser kontinuierlich oder semikontinuierlich oder diskontinuierlich zugegeben werden.

Es ist aber auch möglich, zunächst die aktivierte Stickstoff enthaltende Komponente /AmBr/, gefolgt von der Zugabe des nicht-oxidierenden Biozids, dem Wasser zuzugeben bzw. umgekehrt. Offenbar ist die Reihenfolge der Zugabe nicht entscheidend für die Wirkung des Systems, Seite 6, [0044-46]. In der Tabelle 3 wurde die synergistische Wirkung von Bronopol bei einer gleichzeitigen Dosierung mit der aktivierten Stickstoff enthaltenden Verbindung /AmBr/ nur bei pH 8 festgestellt. Nur bei der Dosierungsrate von BNPD zu AmBr zwischen 1,4:1 bis 1:1,4 war dieser Synergieeffekt vorhanden.

Die Aufgabe der vorliegenden Erfindung war es, zur Reinigung und Desinfektion von mit organischen Verunreinigungen und mikrobiell belasteten industriellen Wassersystemen eine Biozidlösung zu finden, welche gegenüber den bekannten Bioziden bzw. Biozidsystemen die oben erwähnten Nachteile nicht mehr aufweist und eine starke und nachhaltige Wirkung auf die Keimreduktion hat. Es wurde nach einer Möglichkeit gesucht, die Art der Zugabe der Komponenten so zu optimieren, dass sich eine deutlich verbesserte Wirkung auf die Keimreduktion und Keimtötung zeigt.

Die Aufgabe konnte überraschenderweise durch ein Verfahren zur Behandlung von industriellen Wassersystemen gelöst werden, gekennzeichnet durch folgende Verfahrensschritte:
A:
   a. ein in Wasser gelöstes anorganisches Salz Me-X, wobei Me=NH₄, und/oder Na, und/oder K sein kann und X = Br, Cl, SO₄, NO₃ in Mengen von 0,01 bis 30, vorzugsweise 5-20 Gew.-% und
   b. ein nicht oxidierendes Biozid in Mengen von 10-50, vorzugsweise 20-30 Gew.-%,
   werden miteinander gemischt, wobei das Verhältnis von Komponente b. zu a. sich zwischen 0,1 bis 40 bewegt und das Verhältnis der Komponente a. zu Komponente b. sich zwischen 5 bis 50 bewegt,
B: diese wässrige Lösung der Komponenten a. und b. und das Oxidationsmittel, Komponente c, in Mengen von 10-40, vorzugsweise 20-30 Gew.-% unmittelbar dem zu behandelnden Wassersystem getrennt zudosiert werden, wobei das Verhältnis der Komponenten (a. und b.) zur Komponente c sich von 0,5 bis 2, bevorzugt 1 bis 1,5 bewegt, die Komponente a. ausgewählt ist unter Natriumbromid, Natriumchlorid, Kaliumchlorid, Kaliumbromid, Ammoniumsulfat, Ammoniumbromid, Ammoniumchlorid, Ammoniumnitrat und deren Mischungen, die Komponente b. 2-Brom-2-nitropropan-1,3-diol ist und das Verfahren frei von Lösungsvermittlern und rheologischen Hilfsmitteln ist.

Die Komponente a. ist ausgewählt unter Natriumbromid, Natriumchlorid, Kaliumchlorid und/oder Kaliumbromid, aber auch Ammoniumsulfat, Ammoniumbromid, Ammoniumchlorid und Ammoniumnitrat und deren Mischungen. Wenn das zu behandelnde wässrige System Ammoniumsalze enthält, kann die Menge der Komponente a. entsprechend verringert werden.

Als nicht-oxidierendes Biozid, Komponente b. wird 2-Brom-2-nitro-1,3-propandiol eingesetzt.

In einer vorteilhaften Ausführungsform werden die Komponenten a. und b. in konzentrierter Form verwendet und erst vor der Applikation verdünnt, weshalb der Wassergehalt dieser Mischung bei 5 und 90 Gew.-%, bevorzugt zwischen 10 und 50 Gew.-% liegt.

Abhängig von der Zusammensetzung und des vorgesehenen Einsatzbereiches liegen die Konzentrationen der Komponenten a. und b. bei 0,1 bis 300 ppm, bevorzugt bei 0,3 bis 150 ppm.

Die Komponenten a. und b. werden von der Komponente c (Oxidationsmittel) getrennt angewendet, d.h. beide Komponenten [(a. und b.) und c.] werden separat, in einer Paralleldosierung, über eine kontinuierliche oder semikontinuierliche Dosierung, dem industriellen Wassersystem zugeführt. Die Konzentration des Oxidationsmittels liegt bei 0,02 bis 50 ppm, bevorzugt bei 0,03 bis 40 ppm als Cl₂.

Bei getrennter Dosierung der Komponenten erfolgt die Zugabe zum Wassersystem, sowohl in konzentrierter Form, als auch in verdünnter Form, bevorzugt durch Verdünnung mit Wasser, ebenso aber auch durch eine Verdünnung mit dem in der Anlage vorhanden Prozesswasser, z. B. Siebwasser, Filtrate oder Kühlwasser, stattfinden. Dabei kann die Verdünnung der Komponentenmischung (a. und b.) und der Komponente c. mit Wasser das 1 bis 100 fache betragen.

Das Mengenverhältnis der Komponentenmischung (a. und b.) zum Oxidationsmittel beträgt von 0,5-2, bevorzugt 1-1,5.

Das erfindungsgemäße Verfahren findet in wasserführenden industriellen Anlagen, z.B. in der Papierindustrie, in der chemischen Industrie oder in Kraftwerken Verwendung, überall dort, wo das Mikrobenwachstum nachhaltig und wirksam verhindert werden muss, aber auch um das Mikrobenwachstum zu kontrollieren, wobei es diesen Anlagen, sowohl über eine kontinuierliche, als auch über semikontinuierliche Dosierung zugeführt werden kann.

Das erfindungsgemäße Verfahren ist technisch besonders vorteilhaft, weil es frei von Lösungsvermittlern und rheologischen Hilfsmitteln ist und dadurch an zusätzlichem CSB sehr stark reduziert, die technischen Einsatzkomponenten als Lösungen sind sehr gut und zuverlässig pumpbar und dosierbar. Die getrennte Darreichungsform erfüllt trotzdem alle Anforderungen des Gesetzgebers an solche Verfahren zur zuverlässigen und nachhaltigen bioziden Behandlung von industriellen Wassersystemen. D.h. die in diesem Verfahren zum Einsatz kommenden Komponenten bzw. deren Dosierung bewirken eine verbesserte biozide Aktivität, sind jedoch vermindert toxisch gegenüber den sonst in der Praxis eingesetzten Bioziden, weil zur Erreichung einer wirksamen Keimreduktion eine geringere Substanzmenge erforderlich ist.

Die Definition des Begriffes CSB (chemischer Sauerstoff Bedarf) lautet:
Es wird gemessen, wieviel Sauerstoff die chemischen Faulungs-und Reinigungsprozesse im Abwasser verbrauchen. Hohe Werte, also ein hoher Verbrauch, bedeuten, dass das Abwasser noch nicht sehr gut geklärt wurde. Der obere Grenzwert liegt in Deutschland bei 150 mg /L.

Die folgenden Beispiele verdeutlichen die Erfindung näher, wobei sie diese nicht beschränken:
In der Tabelle 1 wird die Verbindung nach dem Stand der Technik, z.B. nach WO 2007/096885 und das erfindungsgemäße Verfahren in Bezug auf die Keimreduktion und Einsatzmengen verglichen. Der Versuch lief in einen Zeitraum von ca. 3 Jahren, an bestimmten Monaten und Tage dieser Jahre.

Die Bestimmung der Keimzahlen erfolgte als Erfolgskontrolle des Einsatzes verschiedener Biozide und gibt Aufschluss darüber, wie wirksam ein gegebenes Biozid bei einer gegebenen Konzentration im Vergleich zum anderen ist. Hierbei kam das Plattengußverfahren zur Anwendung. Bei diesem Verfahren wird von der zu untersuchenden Wasserprobe eine Verdünnungsreihe mit steriler Ringerlösung angelegt. Ein definiertes Probenvolumen wird in eine sterile Petrischale pipettiert und mit flüssigem, autoklaviertem und auf 40 °C abgekühlten Agar übergossen. Damit sich der Nährboden gut mit der Probe vermischt, wird die Petrischale mit geschlossenem Deckel vorsichtig in Achterschleifen bewegt. Es ist darauf zu achten, dass der Agar nicht den Deckel der Petrischale berührt. Nach dem Erstarren werden die Petrischalen mit dem Deckel nach unten in den Brutschrank gelegt und bei einer Temperatur von 30°C im Brutschrank bebrütet. Die Bebrütungsdauer beträgt für die Gesamtkeimzahl 1-3 Tage. Die Auswertung erfolgt durch Auszählen der in dieser Zeit aus jeweils einem einzelnen Keim gewachsenen, mit bloßem Auge sichtbaren Kolonien. Die ermittelte Keimzahl bezieht sich stets auf 1 ml Probe und berücksichtigt den Verdünnungsfaktor. Im Prüfbericht erfolgt die Angabe als Kolonienbildende Einheiten pro ml, KbE/ml.

Um einen optimalen Grad der Keimreduktion zu erreichen, z.B. in der Größenordnung von 1000 bis 100 KbE/ml. (KbE = Kolonien bildende Einheiten), musste das Produkt nach dem Stand der Technik in einer höheren Dosierung eingesetzt werden, als das erfindungsgemäß dosierte Produkt. Hier war die Reduktion der Menge mehr als 30 %, statt 385 ppm nur 185 ppm.

In der Tabelle 2 sind die Ergebnisse der bioziden Behandlung der verschiedenen Medien, wie Siebwasser 1 und 2, Stoffauflauf und filtriertes Siebwasser oder Kroftawasser, die in einer Papierfabrik zu finden sind, mit unterschiedlichen Produkten in Bezug auf die Keimreduktion dargestellt. In der Versuchsperiode von 2009 bis 2011 sind die folgenden Produkte miteinander verglichen worden:
a. 20 % ige DBPNA Lösung alleine
b. Produkt nach dem Stand der Technik WO 2007/096885
c. erfindungsgemäß dosiertes Produkt

In der Tabelle wurden die erreichten Keimreduktionsgrade dargestellt, ausgedrückt ebenfalls mit KbE/ml. Man erkennt hier ebenfalls, dass die Keimreduktion in Bezug auf die Menge der eingesetzten Substanzen mit dem erfindungsgemäß dosierten Produkt am besten war, hier war die Anzahl der Keime bei ca. 100 ! KbE/ml.

Die Untersuchungen wurden mit einer im Stand der Technik üblicherweise verwendeten Mischung von Testbakterienstämmen vorgenommen. Es wurde nach dem Kochschen Plattengußverfahren gearbeitet, eine Methode, die in der Untersuchung von Wasserqualitäten regelmäßig angewandt wird und oben bereits näher beschrieben wurde.

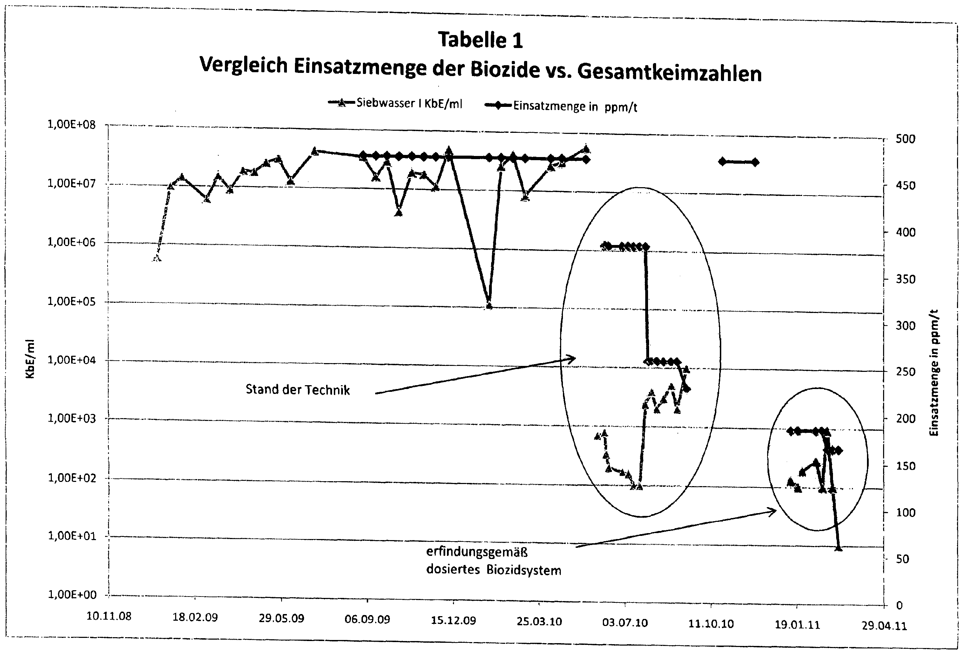

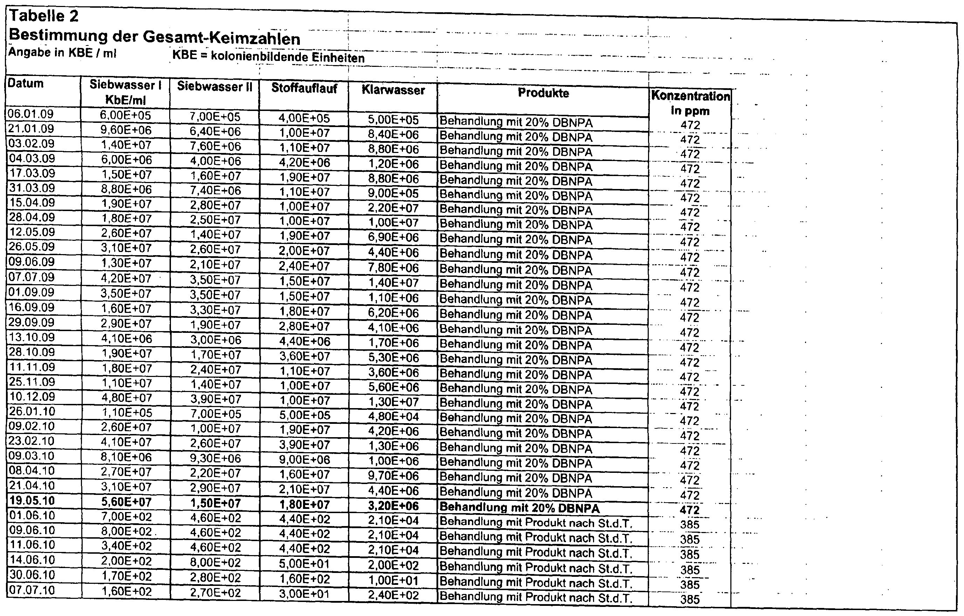

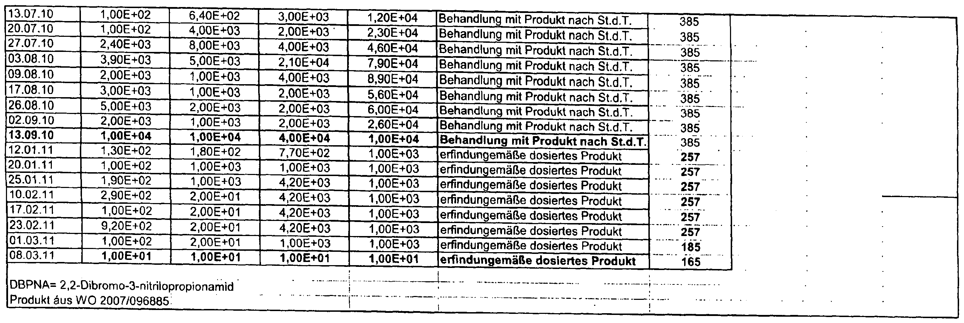

## Patentansprüche

1. Verfahren zur Behandlung von industriellen Wassersystemen **gekennzeichnet durch** folgende Verfahrensschritte:
A:
a. ein in Wasser gelöstes anorganisches Salz Me-X, wobei Me=NH₄, und/oder Na, und/oder K sein kann und X = Br, Cl, SO₄, NO₃ in Mengen von 0,01 bis 30 Gew.-% und
b. ein nicht oxidierendes Biozid in Mengen von 10-50 Gew.-%,
werden miteinander gemischt, wobei das Verhältnis von Komponente b. zu Komponente a. sich zwischen 0,1 bis 40 bewegt und das Verhältnis der Komponente a. zu Komponente b. sich zwischen 5 bis 50 bewegt
B: diese wässrige Lösung der Komponenten a. und b. und ein Oxidationsmittel, Komponente c, in Mengen von 10-40 Gew.-% werden unmittelbar dem zu behandelnden Wassersystem getrennt zudosiert, wobei das Verhältnis der Komponentenmischung (a. und b.) zur Komponente c sich von 0,5 bis 2 bewegt, die Komponente a. ausgewählt ist unter Natriumbromid, Natriumchlorid, Kaliumchlorid, Kaliumbromid, Ammoniumsulfat, Ammoniumbromid, Ammoniumchlorid, Ammoniumnitrat und deren Mischungen, die Komponente b. 2-Brom-2-nitropropan-1,3-diol ist und das Verfahren frei von Lösungsvermittlern und rheologischen Hilfsmitteln ist.

2. Verfahren gemäß Anspruch 1, **dadurch gekennzeichnet, dass** die Komponente c Hypochlorige Säure und/oder Hypobromige Säure oder deren Salze ist.

3. Verfahren nach Anspruch 1, **dadurch gekennzeichnet, dass** die Komponente a. in einer Menge von 5-20 Gew.-% verwendet wird.

4. Verfahren gemäß Anspruch 1, **dadurch gekennzeichnet, dass** der Wassergehalt der wässrigen Lösung bestehend aus den Komponenten a. und b. zwischen 5 und 90 Gew.-%, bevorzugt zwischen 10 und 50 Gew.-% liegt.

5. Verfahren gemäß Anspruch 1, **dadurch gekennzeichnet, dass** die Komponente b. in einer Menge von 10 bis 40 Gew.-%, vorzugsweise von 20 bis 30 Gew.-%, eingesetzt wird.

6. Verfahren gemäß Anspruch 1, **dadurch gekennzeichnet, dass** die wässrige Lösung enthaltend die Komponenten a. und b. mit der Komponente c, in einer Menge von 0,1 bis 300 ppm, bevorzugt von 0,3 bis 150 ppm bezogen auf die Komponente c in einer Paralleldosierung dem zu behandelnden Wassersystem zugeführt wird.

7. Verfahren zur Behandlung von industriellen Wassersystemen gemäß einem der Ansprüche 1 bis 6, **dadurch gekennzeichnet, dass** die Komponente c in Mengen von 20-30 Gew.-% dosiert wird und/oder das Verhältnis der Komponenten (a. und b.) zur Komponente c sich von 1 bis 1,5 bewegt.

8. Verfahren zur Behandlung von industriellen Wassersystemen gemäß Anspruch 1, **dadurch gekennzeichnet, dass** die Lösung, bestehend aus den Komponenten a. und b. in einer Menge von 0,1 bis 300 ppm, bevorzugt von 0,3 bis 150 ppm und die Komponente c, in einer Menge von 0,02 bis 50 ppm, bevorzugt von 0,03 bis 25 ppm als Cl₂ dem Wassersystem zu dosiert werden.

## Claims

1. Method for the treatment of industrial water systems **characterized by** the following process steps:
A:
a. a water-dissolved inorganic salt Me-X, wherein Me can be = NH₄ and/or Na and/or K, and X = Br, Cl, SO₄, NO₃, in amounts from 0.01 to 30 wt.-%, and
b. a non-oxidizing biocide in amounts of 10-50 wt.-%,
are mixed with each other, wherein the ratio of component b. to component a. ranges between 0.1 to 40, and the ratio of component a. to component b. ranges between 5 to 50.
B: this aqueous solution of components a. and b. and the oxidizing agent, component c, in amounts of 10-40 wt.-% are directly, separately dosed to the water system to be treated, wherein the ratio of the component mixture (a. and b.) to component c ranges from 0.5-2, the component a. is selected from sodium bromide, sodium chloride, potassium chloride, potassium bromide, ammonium sulfate, ammonium bromide, ammonium chloride, ammonium nitrate, and mixtures thereof, the component b. is 2-bromo-2-nitropropane-1,3-diole, and the method is free from solubilizers and rheological aids.

2. Method according to claim 1, **characterized in that** the component c is hypochlorous acid and/or hypobromous acid or their salts.

3. Method according to claim 1, **characterized in that** the component a. is used in amounts of 5-20 wt.-%.

4. Method according to claim 1, **characterized in that** the water content of the aqueous solution consisting of the components a. and b. lies between 5 and 90 wt.-%, preferably between 10 and 50 wt.-%.

5. Method according to claim 1, **characterized in that** the component b. is used in an amount of 10 to 40 wt.-%, preferably 20-30 wt.-%.

6. Method according to claim 1, **characterized in that** the aqueous solution containing the components a. and b. is supplied to the water system to be treated in a parallel dosing with the component c in an amount of 0.1 to 300 ppm, preferably from 0.3 to 150 ppm, based on the component c.

7. Method for the treatment of industrial water systems according to anyone of claims 1 to 6, **characterized in that** the component c is dosed in amounts of 20-30 wt.-% and/or the ratio of the components (a. and b.) to the component c ranges from 1 to 1.5.

8. Method for the treatment of industrial water systems according to claim 1, **characterized in that** the solution consisting of the components a. and b. is dosed to the water system in an amount of 0.1 to 300 ppm, preferably of 0.3 to 150 ppm and the component c in an amount of 0.02 to 50 ppm, preferably of 0.03 to 25 ppm, as Cl₂.

## Revendications

1. Procédé pour le traitement de systèmes aqueux industriels **caractérisé par** les étapes de procédé suivantes:
A:
a. un sel inorganique Me-X dissous dans l'eau, dans lequel Me peut être = NH₄, et/ou Na, et/ou K et X = Br, Cl, SO₄, NO₃ dans des quantités allant de 0,01 à 30 % en poids et
b. un biocide non oxydant dans des quantités allant de 10 à 50 % en poids,
sont mélangés l'un avec l'autre, dans lequel le rapport du constituant b. au constituant a. va de 0,1 à 40 et le rapport du constituant a. au constituant b. va de 5 à 50
B: cette solution aqueuse des constituants a. et b. et un agent d'oxydation, le constituant c, dans des quantités allant de 10 à 40 % en poids, sont directement ajoutés séparément au système aqueux à traiter, dans lequel le rapport du mélange de constituants (a. et b.) au constituant c va de 0,5 à 2, le constituant a. est sélectionné parmi le bromure de sodium, le chlorure de sodium, le chlorure de potassium, le bromure de potassium, le sulfate d'ammonium, le bromure d'ammonium, le chlorure d'ammonium, le nitrate d'ammonium et leurs mélanges, le constituant b. est le 2-bromo-2-nitropropane-1,3-diol et le procédé est exempt d'agents de solubilisation et d'adjuvants rhéologiques.

2. Procédé selon la revendication 1, **caractérisé en ce que** le constituant c est l'acide hypochloreux et/ou l'acide hypobromeux ou leurs sels.

3. Procédé selon la revendication 1, **caractérisé en ce que** le constituant a. est utilisé dans une quantité allant de 5 à 20 % en poids.

4. Procédé selon la revendication 1, **caractérisé en ce que** la teneur en eau de la solution aqueuse constituée des constituants a. et b. est comprise entre 5 et 90 % en poids, de préférence entre 10 et 50 % en poids.

5. Procédé selon la revendication 1, **caractérisé en ce que** le constituant b. est utilisé dans une quantité allant de 10 à 40 % en poids, de préférence de 20 à 30 % en poids.

6. Procédé selon la revendication 1, **caractérisé en ce que** la solution aqueuse contenant les constituants a. et b. est introduite dans le système aqueux à traiter avec le constituant c, dans une quantité allant de 0,1 à 300 ppm, de préférence de 0,3 à 150 ppm rapporté au constituant c dans un dosage en parallèle.

7. Procédé pour le traitement de systèmes aqueux industriels selon l'une des revendications 1 à 6, **caractérisé en ce que** le constituant c est dosé dans des quantités allant de 20 à 30 % en poids et/ou le rapport des constituants (a. et b.) au constituant c va de 1 à 1,5.

8. Procédé pour le traitement de systèmes aqueux industriels selon la revendication 1, **caractérisé en ce que** la solution, constituée des constituants a. et b. dans une quantité allant de 0,1 à 300 ppm, de préférence de 0,3 à 150 ppm et le constituant c, dans une quantité allant de 0,02 à 50 ppm, de préférence de 0,03 à 25 ppm sous forme de Cl₂ sont ajoutés au système aqueux.
